# EUROPEAN PATENT SPECIFICATION

(11) **EP 3 061 964 B1**
(45) Date of publication and mention of the grant of the patent: **18.04.2018**
(21) Application number: 16155185.8
(22) Date of filing: 11.02.2016
(51) Int. Cl.: H02K 7/18, H02K 9/04, F03D 80/55, H02K 5/20, F03D 9/25, F03D 80/60, H02K 9/28

(54) **SYSTEM AND METHOD FOR COOLING OR CLEANING A SLIP RING ASSEMBLY OF A GENERATOR**
ANORDNUNG UND VERFAHREN ZUM KÜHLEN BEZIEHUNGSWEISE REINIGEN EINER SCHLEIFRINGANORDNUNG EINES GENERATORS
SYSTÈME ET PROCÉDÉ POUR LE REFROIDISSEMENT OU LE NETTOYAGE D'UN ENSEMBLE DE BAGUE COLLECTRICE D'UN GÉNÉRATEUR

(30) Priority: 24.02.2015 US 201514629783
(43) Date of publication of application: 31.08.2016
(73) Proprietor: General Electric Company, Schenectady, NY 12345 (US)
(72) Inventor: ANDRESON, Brian, Schenectady, NY New York 12345 (US); LORD, Adam, Schenectady, NY New York 12345 (US); BLACK, Stephen Hugh, Schenectady, NY New York 12345 (US); RITTER, Allen Michael, Salem, VA Virginia 24153 (US)
(74) Representative: Bedford, Grant Richard

(56) References cited:
- DE-A1-102013 202 033
- DE-C- 206 753
- JP-A- S53 116 406
- US-A- 4 119 873
- US-A1- 2010 283 336

## Description

The present disclosure relates generally to wind turbines, and more particularly to systems and methods for cooling wind turbine generators, particularly the slip ring compartment of the generator.

Wind power is considered one of the cleanest, most environmentally friendly energy sources presently available, and wind turbines have gained increased attention in this regard. A modem wind turbine typically includes a tower, a generator, a gearbox, a nacelle, and one or more rotor blades. The nacelle includes a rotor coupled to the gearbox and to the generator. The rotor and the gearbox are mounted on a bedplate support frame located within the nacelle. More specifically, in many wind turbines, the gearbox is mounted to the bedplate via one or more torque supports or arms. The rotor blades capture kinetic energy of wind using known airfoil principles. The rotor blades transmit the kinetic energy in the form of rotational energy so as to turn a shaft coupling the rotor blades to a gearbox, or if a gearbox is not used, directly to the generator. The generator then converts the mechanical energy to electrical energy that may be deployed to a utility grid.

In some instances, the generator of the wind turbine may be a doubly fed induction generator (DFIG), which supplies electrical current to a rotor winding by way of slip rings. The current is typically applied to the slip rings via brushes mounted on a fixed conducting ring. Ordinarily, the slip rings in such systems are at low voltage. Some high voltage systems also employ slip rings for such purposes as power transfer. See, in this regard, U.S. Pat. No. 3,471,708 to Rauhut for a rotary transformer for coupling multiphase systems having a small frequency difference.

The carbon brushes typically utilized in such generators wear with use over time. In addition, sticking in brush holders caused by carbon dust build up and swelling may lead to arcing and catastrophic failure of the collector ring. Further, operative elements in such generators can become quite hot due to electrical losses and mechanical friction. Wear to the brushes, as well as excessive heat in the collector ring department may cause generator failures. Such failures result in turbine down time, which means a loss in revenue stream for turbine owners in addition to the cost for replacing failed hardware.

Various cooling systems for electrical machines are known, for example, from US 2010/0283336 and DE 206 753.

In view of the aforementioned, systems and methods which provide cooling and/or cleaning to the slip ring compartment to enhance overall operation of the turbine would be desired in the art. DE 10 2013 202 033 discloses a wind turbine according to the preamble of claim 1. Various aspects and advantages of the invention will be set forth in part in the following description, or may be clear from the description, or may be learned through practice of the invention.

The present invention is defined by the appended claims.

Various features, aspects and advantages of the present invention will become better understood with reference to the following description and appended claims. The accompanying drawings, which are incorporated in and constitute a part of this specification, illustrate embodiments of the invention and, together with the description, serve to explain the principles of the invention. In the drawings:
FIG. 1 illustrates a perspective view of one embodiment of a wind turbine according to one embodiment of the present disclosure;
FIG. 2 illustrates a perspective view of a simplified, internal view of one embodiment of a nacelle of a wind turbine according to the present disclosure;
FIG. 3 illustrates a cross-sectional, internal view of one embodiment of a generator of a wind turbine according to the present disclosure;
FIG. 4 illustrates a perspective, external view of one embodiment of a system for cooling or cleaning the slip ring compartment of a generator of a wind turbine according to the present disclosure;
FIG. 5 illustrates a side view of one embodiment of a system for cooling or cleaning the slip ring assembly of a generator of a wind turbine according to the present disclosure;
FIG. 6 illustrates an end view of one embodiment of a system for cooling or cleaning the slip ring assembly of a generator of a wind turbine according to the present disclosure; and
FIG. 7 illustrates a flow diagram of one embodiment of a method for cooling or cleaning the slip ring assembly of a generator of a wind turbine according to the present disclosure.

Reference now will be made in detail to embodiments of the invention, one or more examples of which are illustrated in the drawings. Each example is provided by way of explanation of the invention, not limitation of the invention. In fact, it will be apparent to those skilled in the art that various modifications and variations can be made in the present invention without departing from the scope of the invention. For instance, features illustrated or described as part of one embodiment can be used with another embodiment to yield a still further embodiment. Thus, it is intended that the present invention covers such modifications and variations as come within the scope of the appended claims and their equivalents.

Generally, the present disclosure is directed to systems and methods for cooling or cleaning a slip ring assembly of a generator of a wind turbine. The slip ring assembly is enclosed in a slip ring compartment and contains an electrically conductive slip ring mounted to a rotatable shaft and a fixed conductive ring assembly having slip-ring contacting members mounted thereon. Accordingly, the system includes a conduit assembly configured to direct ambient air into the slip ring compartment so as to cool or clean the slip ring compartment. More specifically, a first end of the conduit assembly is configured at or before an inlet of the generator, whereas the second end is configured at the slip ring compartment. As such, the conduit assembly takes air from the front inlet of the generator and bypasses the rotor/stator assembly so as to direct cool air directly to the slip ring compartment to eliminate heat-soaked cooling air use.

The present disclosure provides many advantages not present in the prior art. For example, the system of the present disclosure improves the wear rate of the slip-ring contacting members (e.g. carbon brushes) as well as mitigates sticking in brush holders caused by carbon dust build up and swelling. Sticking brushes can lead to arcing and catastrophic failure of the collector ring, therefore, improved cooling leads to improved slip ring operation and brush life. As such, the down time of the units due to failed brushes is reduced and brush life is increased. In addition, maintenance intervals and costs are reduced. Further, in certain embodiments, the system and method of the present disclosure uses existing generator components, e.g. the generator fan, therefore system costs are relatively inexpensive.

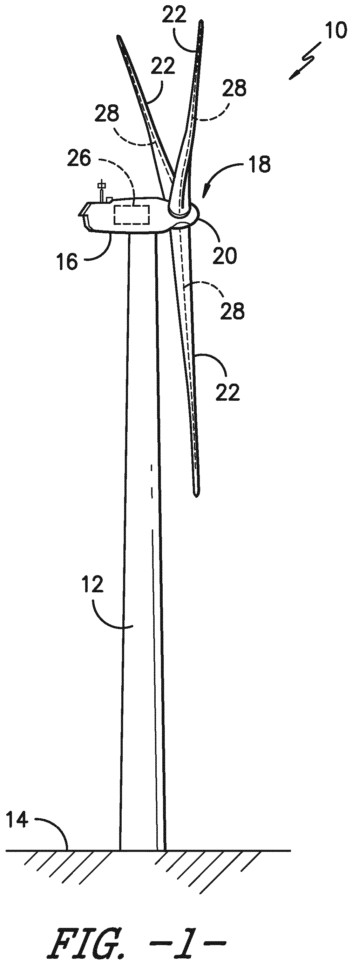

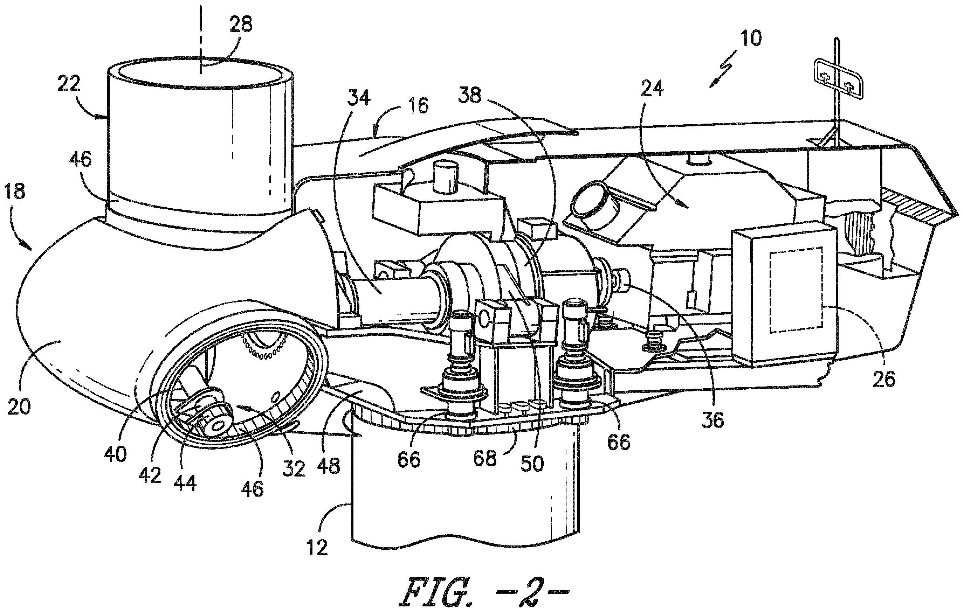

Referring now to the drawings, FIG. 1 illustrates a perspective view of one embodiment of a wind turbine 10 according to the present disclosure. As shown, the wind turbine 10 generally includes a tower 12 extending from a support surface 14, a nacelle 16 mounted on the tower 12, and a rotor 18 coupled to the nacelle 16. The rotor 18 includes a rotatable hub 20 and at least one rotor blade 22 coupled to and extending outwardly from the hub 20. For example, in the illustrated embodiment, the rotor 18 includes three rotor blades 22. However, in an alternative embodiment, the rotor 18 may include more or less than three rotor blades 22. Each rotor blade 22 may be spaced about the hub 20 to facilitate rotating the rotor 18 to enable kinetic energy to be transferred from the wind into usable mechanical energy, and subsequently, electrical energy. For instance, the hub 20 may be rotatably coupled to an electric generator 24 (FIG. 2) positioned within the nacelle 16 to permit electrical energy to be produced.

The wind turbine 10 may also include a wind turbine controller 26 centralized within the nacelle 16. However, in other embodiments, the controller 26 may be located within any other component of the wind turbine 10 or at a location outside the wind turbine 10. Further, the controller 26 may be communicatively coupled to any number of the components of the wind turbine 10 in order to control the components. As such, the controller 26 may include a computer or other suitable processing unit. Thus, in several embodiments, the controller 26 may include suitable computer-readable instructions that, when implemented, configure the controller 26 to perform various different functions, such as receiving, transmitting and/or executing wind turbine control signals.

Referring now to FIG. 2, a simplified, internal view of one embodiment of the nacelle 16 of the wind turbine 10 shown in FIG. 1 is illustrated. As shown, the generator assembly 24 may be coupled to the rotor 18 for producing electrical power from the rotational energy generated by the rotor 18. For example, as shown in the illustrated embodiment, the rotor 18 may include a rotor shaft 34 coupled to the hub 20 for rotation therewith. The rotor shaft 34 may, in turn, be rotatably coupled to a generator shaft 36 of the generator 24 through a gearbox 38. Further, the gearbox 38 is connected to a bedplate support frame 48 by one or more torque supports 50. As is generally understood, the rotor shaft 34 provides a low speed, high torque input to the gearbox 38 in response to rotation of the rotor blades 22 and the hub 20. The gearbox 38 then converts the low speed, high torque input to a high speed, low torque output to drive the generator shaft 36 and, thus, the generator 24.

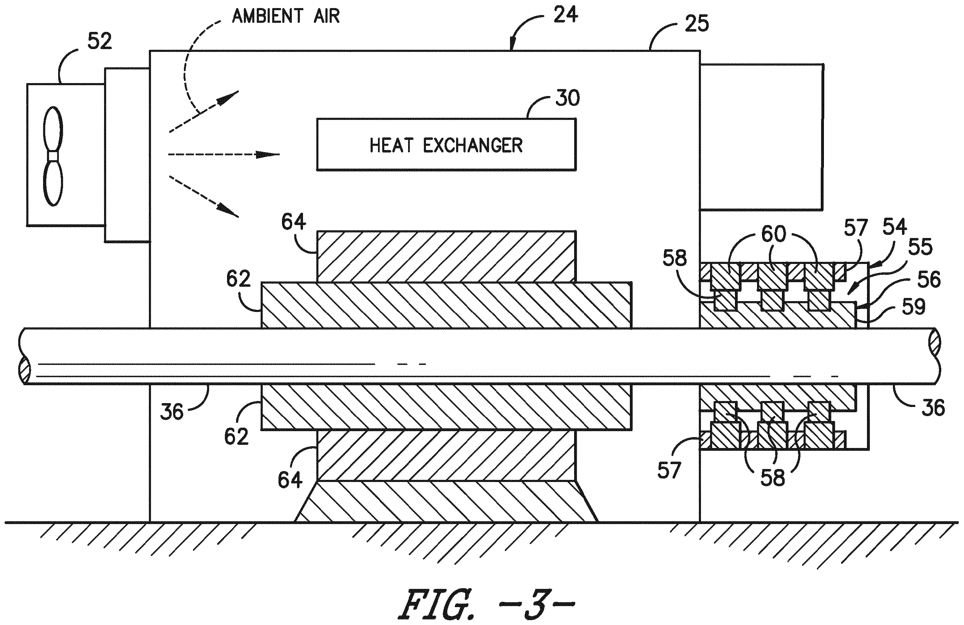

Each rotor blade 22 may also include a pitch adjustment mechanism 32 configured to rotate each rotor blade 22 about its pitch axis 28, depending on the wind speed and/or wind direction. As such, pitching the blades 22 directly affects the power output of the generator 24. More specifically, each pitch adjustment mechanism 32 may include a pitch drive motor 40 (e.g., any suitable electric, hydraulic, or pneumatic motor), a pitch drive gearbox 42, and a pitch drive pinion 44. In such embodiments, the pitch drive motor 40 may be coupled to the pitch drive gearbox 42 so that the pitch drive motor 40 imparts mechanical force to the pitch drive gearbox 42. Similarly, the pitch drive gearbox 42 may be coupled to the pitch drive pinion 44 for rotation therewith. The pitch drive pinion 44 may, in turn, be in rotational engagement with a pitch bearing 46 coupled between the hub 20 and a corresponding rotor blade 22 such that rotation of the pitch drive pinion 44 causes rotation of the pitch bearing 46. Thus, in such embodiments, rotation of the pitch drive motor 40 drives the pitch drive gearbox 42 and the pitch drive pinion 44, thereby rotating the pitch bearing 46 and the rotor blade 22 about the pitch axis 28. Similarly, the wind turbine 10 may include one or more yaw drive mechanisms 66 communicatively coupled to the controller 26, with each yaw drive mechanism(s) 66 being configured to change the angle of the nacelle 16 relative to the wind (e.g., by engaging a yaw bearing 68 of the wind turbine 10). Referring now to FIG. 3, a cross-sectional view of one embodiment of the generator assembly 24 according to the present disclosure is illustrated. For example, as shown, the generator 24 may be a doubly-fed induction generator (DFIG), although any other type of generator is within the scope of the invention as well. More
specifically, the generator 24 includes a generator housing 25 that contains a rotor assembly 62 having rotor windings which rotates about the rotatable shaft 36 and a stator 64 having stator windings. Further, as shown, the rotor assembly 62 is operatively coupled with the stator 64. More specifically, the rotor assembly 62 of the generator 24 is mechanically connected to the wind turbine 10 through the drive train system (i.e. the high and low speed shafts 34, 36, bearings, and the gearbox 38). Moreover, the rotor assembly 62 is fed by bi-directional voltage-source converters. Thereby, the speed and torque of the generator 24 is regulated by controlling the rotor-side converter of the power converter (not shown). The stator 64 transfers power to the grid while the generator rotor 62 can handle power in both directions. The converter controls the rotor circuit current, frequency and phase angle shifts. Such induction generators are capable of operating at a wide slip range (typically ±30% of synchronous speed). As a result, DFIGs offer many advantages such as high energy yield, reduction in mechanical stresses and power fluctuations, and controllability of reactive power.

In addition, the generator assembly 24 may also include various cooling components configured to cool the components within the generator housing 25. For example, as shown, the generator assembly 24 includes a generator heat exchanger 30 and/or a fan 52 within the generator housing 25. Further, as indicated by the dotted lines, the fan 30 is configured to direct ambient air across the rotor assembly 62 and the stator 64. In addition, the heat exchanger 30 is configured to control the temperature within the generator housing 25 so as to maintain the operating temperature of the rotor assembly 62 and the stator 64 within safe operating ranges.

Still referring to FIG. 3, the generator assembly 24 also includes a slip ring assembly 55 configured to apply current to the rotor assembly 62. As shown, the slip ring assembly 55 is at least partially enclosed in a slip ring compartment 54 (or collector ring compartment). The slip ring compartment 54 also houses the associated slip-ring contacting members 60 that supply electrical current to the rotor 62 windings. More specifically, the slip ring assembly 55 includes an electrically conductive slip ring 56 mounted to the rotatable shaft 36 and a fixed conductive ring assembly 57 having slip-ring contacting members 60 mounted thereon. Further, the conductive slip ring 56 includes a slip ring body 59 and slip contact rings 58. As such, current is typically applied to the slip contact rings 58 via the slip-ring contacting members 60 (e.g. carbon brushes) that are mounted on the fixed conductive ring assembly 57. As mentioned, the brushes 60 can wear with use over time. In addition, dust from the worn brushes can accumulate and contaminate insulation surfaces, thereby causing undesirable effects within the slip ring compartment 54. Moreover, operative elements in the DFIG 24 can overheat, thereby causing additional damage.

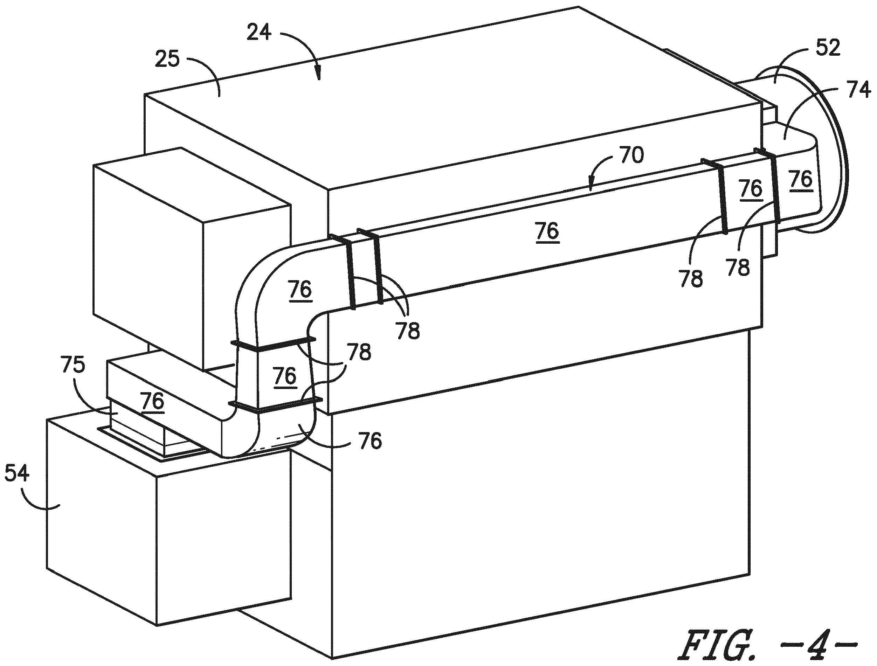

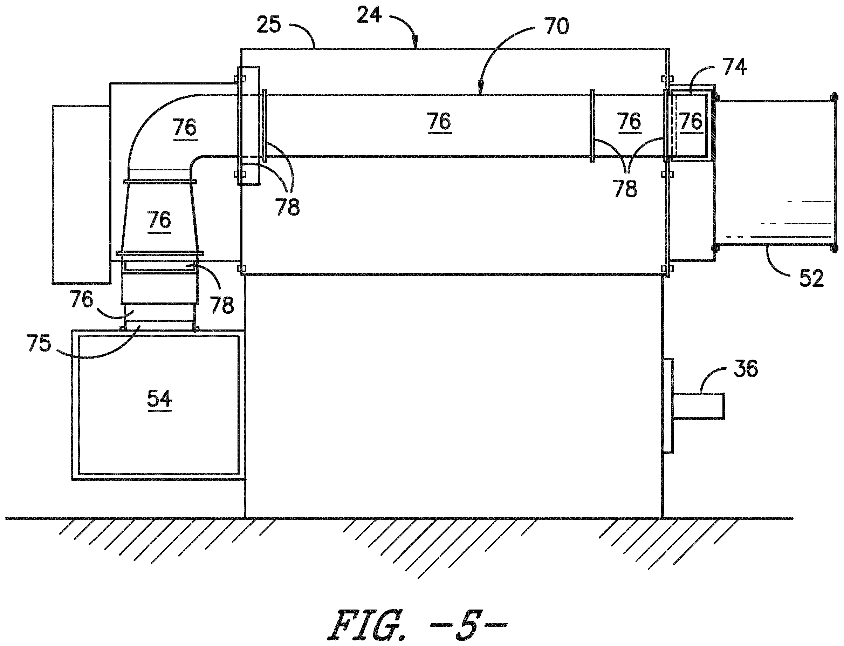

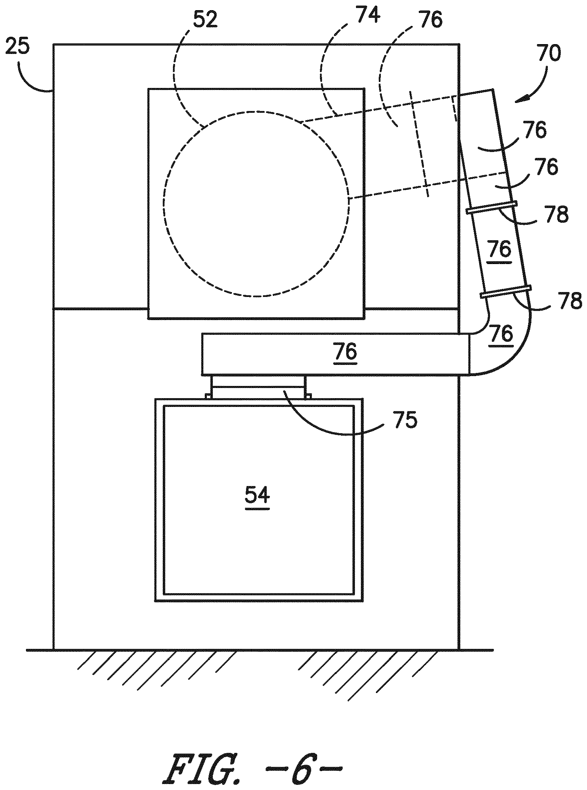

Accordingly, the present disclosure is directed to a system 70 for cooling and/or cleaning the slip ring assembly 55 to prevent the undesirable affects as described herein from occurring. For example, as shown in FIGS. 4-6, various views of one embodiment of the system 70 for cooling or cleaning the slip ring compartment 54 of the generator 24 according to the present disclosure are illustrated. More specifically, FIG. 4 illustrates a perspective view of the system 70; FIG. 5 illustrates a side view of the system 70; and FIG. 6 illustrates an end view of the system 70 according to the present disclosure. As shown, the system 70 includes a conduit assembly 72 that is configured to direct fluid (e.g. ambient air) into the slip ring compartment 54 so as to cool or clean the slip ring assembly 55. Further, the conduit assembly 72 extends from a first end 74 to a second end 75. More specifically, the first end 74 is configured at or before an inlet of the generator 24, whereas the second end 75 is configured at the slip ring compartment 54. In addition, in certain embodiments, the conduit assembly 72 may be configured at or before an inlet of the generator heat exchanger 30 and after the fan 52 such that the fan 52 directs the cool air through the conduit assembly 72 directly to the slip ring assembly 55, thus bypassing the rotor/stator assembly.

In certain embodiments, the conduit assembly 72 may include a plurality of conduit members 76 arranged between the first and second ends 74, 75. In addition, the conduit assembly 72 may also include one or more support brackets 78 configured to support or mount one or more of the conduit members 76 to an exterior surface of the generator housing 25. For example, as shown in FIGS. 5 and 6, the conduit assembly 72 includes a total of five conduit members 76 arranged from the first and second ends 74, 75. In further embodiments, it should be understood that the conduit assembly 72 may include any number of conduit members 76, including more than five or less than five. In addition, the conduit assembly 72 may include any one of or a combination of straight conduit members 76, bent conduit members, and/or curved or arcuate conduit members 76 arranged from the first and second ends 74, 75. As such, the conduit assembly 72 may easily direct fluid from the inlet of the generator 24 to the slip ring compartment 54 so as to bypass heat generated by the rotor assembly 62 and/or the stator 64.

In additional embodiments, the conduit members 76 may have any suitable cross-sectional shape, including but not limited to square, rectangle, arcuate, trapezoidal, and/or similar. Further, the conduit members 76 may be constructed of any suitable material, including but not limited to galvanized steel, aluminum, and/or any other suitable sheet metal material. Still additional non-metal materials are within the scope of the invention as well.

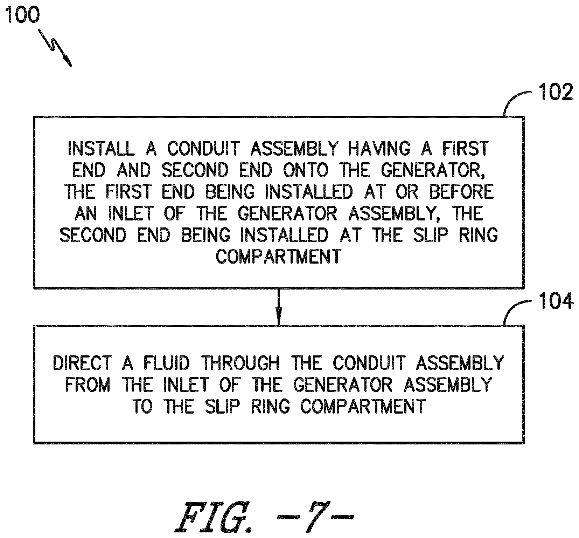

Referring now to FIG. 7, a flow diagram of one embodiment of a method 100 for cooling or cleaning a slip ring assembly of a generator according to the present disclosure is illustrated. As mentioned, the slip ring assembly is at least partially enclosed in a slip ring compartment and has an electrically conductive slip ring mounted to a rotatable shaft and a fixed conductive ring assembly having slip-ring contacting members mounted thereon. At 102, the method 100 includes installing a conduit assembly having a first end and second end onto the generator, the first end being installed at or before an inlet of the generator, the second end being installed at the slip ring compartment. At 104, the method 100 includes directing a fluid, e.g. ambient air, through the conduit assembly from the inlet of the generator to the slip ring assembly. As such, cool air is directly delivered to the slip ring compartment 54 and bypasses the rotor/stator assembly, thereby eliminating heat-soaked air use.

Furthermore, the skilled artisan will recognize the interchangeability of various features from different embodiments. Similarly, the various method steps and features described, as well as other known equivalents for each such methods and feature, can be mixed and matched by one of ordinary skill in this art to construct additional systems and techniques in accordance with principles of this disclosure. Of course, it is to be understood that not necessarily all such objects or advantages described above may be achieved in accordance with any particular embodiment. Thus, for example, those skilled in the art will recognize that the systems and techniques described herein may be embodied or carried out in a manner that achieves or optimizes one advantage or group of advantages as taught herein without necessarily achieving other objects or advantages as may be taught or suggested herein.

This written description uses examples to disclose the invention, including the preferred mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they include structural elements that do not differ from the literal language of the claims, or if they include equivalent structural elements with insubstantial differences from the literal languages of the claims.

## Claims

1. A wind turbine (10), comprising:
a generator assembly (24), the generator assembly (24) comprising:
a rotor assembly (62) having rotor windings which rotate about a rotatable shaft (36);
a stator assembly (64) having stator windings;
a slip ring assembly (55) configured to apply current to the rotor assembly (62), the slip ring assembly (55) at least partially enclosed in a slip ring compartment (54), the slip ring assembly (55) comprising an electrically conductive slip ring (56) mounted to the rotatable shaft (36) and a fixed conductive ring assembly (57) having slip-ring contacting members (60) mounted thereon; and
a conduit assembly (72) configured to direct fluid into the slip ring compartment (54) so as to cool or clean the slip ring assembly (55), the conduit assembly (72) extending from a first end (74) to a second end (75), the second end (75) being configured with the slip ring compartment (54), **characterized by** the first end (74) of the conduit assembly being configured at or before a front inlet of the generator assembly (24), said conduit assembly (72) bypassing the rotor/stator assemblies (62,64) so as to direct cool air directly to the slip ring compartment (54) to eliminate heat-soaked cooling air use.

2. The wind turbine (10) of claim 1, further comprising a generator housing (25) configured to at least partially enclose the rotor assembly (62) and the stator (64).

3. The wind turbine (10) of claim 2, further comprising a generator heat exchanger (30) and a fan (52), the generator heat exchanger (30) and the fan (52) configured to control a temperature of the generator housing (25).

4. The wind turbine (10) of claim 3, wherein the conduit assembly (72) is configured at or before an inlet of the generator heat exchanger (30) and after the fan (52) such that the fan (52) directs the fluid through the conduit assembly (72) so as to cool or clean the slip ring assembly (55).

5. The wind turbine (10) of any preceding claim, wherein the conduit assembly (72) comprises a plurality of conduit members (76) arranged together from the first end (74) to the second end (75) so as to direct fluid from the front inlet of the generator (24) assembly to the slip ring assembly (55).

6. The wind turbine (10) of claim 5, wherein the conduit assembly (72) further comprises at least one of or a combination of straight conduit members (76), bent conduit members (76), or curved conduit members (76).

7. The wind turbine (10) of claim 5 or claim 6, wherein the conduit assembly (72) further comprises one or more support brackets (78) configured to support and mount the one or more conduit members (76) to an exterior surface of the generator housing (25).

8. The wind turbine (10) of any preceding claim, wherein the slip-ring contacting members (60) comprise brushes.

9. The wind turbine (10) of any preceding claim, wherein the fluid comprises ambient air.

10. A method for cooling or cleaning the slip ring assembly (55) of the generator (24) in the wind turbine (10) of any preceding claim, the method comprising:
installing the conduit assembly (72) having the first end (74) and the second end (75) onto the generator (24), the first end (74) being installed at or before a front inlet of the generator (24), the second end (75) being installed at the slip ring compartment (54); and
directing a fluid through the conduit assembly (72) from the front inlet of the generator (24) to the slip ring assembly (55).

## Patentansprüche

1. Windturbine (10), umfassend:
eine Generatoranordnung (24), wobei die Generatoranordnung (24) umfasst:
eine Rotoranordnung (62), die Rotorwicklungen aufweist, die sich um eine drehbare Welle (36) drehen;
eine Statoranordnung (64), die Statorwicklungen aufweist;
eine Schleifringanordnung (55), die konfiguriert ist, um Strom an die Rotoranordnung (62) anzulegen, wobei die Schleifringanordnung (55) mindestens teilweise in einer Schleifringkammer (54) umschlossen ist, wobei die Schleifringanordnung (55) einen elektrisch leitenden Schleifring (56) umfasst, der an der drehbaren Welle (36) angebracht ist, und eine feste leitende Ringanordnung (57), an der Schleifringkontaktelemente (60) angebracht sind; und
eine Leitungsanordnung (72), die konfiguriert ist, um Fluid in die Schleifringkammer (54) zu leiten, um die Schleifringanordnung (55) zu kühlen oder zu reinigen, wobei sich die Leitungsanordnung (72) von einem ersten Ende (74) zu einem zweiten Ende (75) erstreckt, wobei das zweite Ende (75) mit der Schleifringkammer (54) konfiguriert ist, **dadurch gekennzeichnet, dass** das erste Ende (74) der Leitungsanordnung an oder vor einem vorderen Einlass der Generatoranordnung (24) konfiguriert ist, wobei die Leitungsanordnung (72) die Rotor-/ Statoranordnungen (62, 64) umgeht, um Kühlluft direkt zu der Schleifringkammer (54) zu leiten, um die Verwendung von durchwärmter Kühlluft zu beseitigen.

2. Windturbine (10) nach Anspruch 1, weiter umfassend ein Generatorgehäuse (25), das konfiguriert ist, um die Rotoranordnung (62) und den Stator (64) mindestens teilweise zu umschließen.

3. Windturbine (10) nach Anspruch 2, weiter umfassend einen Generatorwärmetauscher (30) und ein Gebläse (52), wobei der Generatorwärmetauscher (30) und das Gebläse (52) konfiguriert sind, um eine Temperatur des Generatorgehäuses (25) zu steuern.

4. Windturbine (10) nach Anspruch 3, wobei die Leitungsanordnung (72) an oder vor einem Einlass des Generatorwärmetauschers (30) und nach dem Gebläse (52) derart konfiguriert ist, dass das Gebläse (52) das Fluid durch die Leitungsanordnung (72) leitet, um die Schleifringanordnung (55) zu kühlen oder zu reinigen.

5. Windturbine (10) nach einem der vorstehenden Ansprüche, wobei die Leitungsanordnung (72) eine Vielzahl von Leitungselementen (76) umfasst, die vom ersten Ende (74) zum zweiten Ende (75) gemeinsam angeordnet sind, um Fluid von dem vorderen Einlass der Generatoranordnung (24) zu der Schleifringanordnung (55) zu leiten.

6. Windturbine (10) nach Anspruch 5, wobei die Leitungsanordnung (72) weiter mindestens eines von oder eine Kombination aus geraden Leitungselementen (76), gebogenen Leitungselementen (76) oder gekrümmten Leitungselementen (76) umfasst.

7. Windturbine (10) nach Anspruch 5 oder Anspruch 6, wobei die Leitungsanordnung (72) weiter einen oder mehrere Trägerbügel (78) umfasst, die konfiguriert sind, um das eine oder die mehreren Leitungselemente (76) an einer äußeren Oberfläche des Generatorgehäuses (25) zu tragen oder anzubringen.

8. Windturbine (10) nach einem der vorstehenden Ansprüche, wobei die Schleifringkontaktelemente (60) Bürsten umfassen.

9. Windturbine (10) nach einem der vorstehenden Ansprüche, wobei das Fluid Umgebungsluft umfasst.

10. Verfahren zum Kühlen oder Reinigen der Schleifringanordnung (55) des Generators (24) in der Windturbine (10) nach einem der vorstehenden Ansprüche, wobei das Verfahren umfasst:
Installieren der Leitungsanordnung (72), die das erste Ende (74) und das zweite Ende (75) auf dem Generator (24) aufweist, wobei das erste Ende (74) an oder vor einem vorderen Einlass des Generators (24) installiert wird und das zweite Ende (75) an der Schleifringkammer (54) installiert wird; und
Leiten eines Fluids durch die Leitungsanordnung (72) von dem vorderen Einlass des Generators (24) zu der Schleifringanordnung (55).

## Revendications

1. Eolienne (10) comprenant :
un ensemble générateur (24), l'ensemble générateur (24) comprenant :
un ensemble de rotor (62) ayant des enroulements de rotor qui tournent autour d'un arbre rotatif (36) ;
un ensemble de stator (64) ayant des enroulements de stator ;
un ensemble de bague collectrice (55) configuré pour appliquer du courant à l'ensemble de rotor (62), l'ensemble de bague collectrice (55) étant au moins en partie enserrée dans un compartiment de bague collectrice (54), l'ensemble de bague collectrice (55) comprenant une bague collectrice électroconductrice (56) montée sur l'arbre rotatif (36) et un ensemble de bague conductrice fixe (57) ayant des éléments de contact de bague collectrice (60) qui y sont montés ; et
un ensemble de conduits (72) configuré pour diriger du fluide dans le compartiment de bague collectrice (54) de manière à refroidir ou à nettoyer l'ensemble de bague collectrice (55), l'ensemble de conduits (62) s'étendant d'une première extrémité (74) à une seconde extrémité (75), la seconde extrémité (75) étant configurée avec le compartiment de bague collectrice (54), **caractérisée en ce que** la première extrémité (74) de l'ensemble de conduits est configurée à une extrémité avant de l'ensemble générateur (24) ou devant celle-ci, ledit ensemble de conduits (72) contournant les ensembles de rotor/stator (62, 64) de manière à diriger de l'air froid directement dans le compartiment de bague collectrice (54) afin d'éliminer l'utilisation d'air de refroidissement imprégné de chaleur.

2. Eolienne (10) selon la revendication 1, comprenant en outre un boîtier de générateur (25) configuré pour enserrer au moins en partie l'ensemble de rotor (62) et le stator (64).

3. Eolienne (10) selon la revendication 2, comprenant en outre un échangeur de chaleur de générateur (30) et un ventilateur (52), l'échangeur de chaleur de générateur (30) et le ventilateur (52) étant configurés pour commander une température du boîtier de générateur (25).

4. Eolienne (10) selon la revendication 3, dans laquelle l'ensemble de conduits (72) est configuré à une entrée de l'échangeur de chaleur de générateur (30) ou devant celui-ci et après le ventilateur (52) de sorte que le ventilateur (52) dirige le fluide à travers l'ensemble de conduits (72) de manière à refroidir ou à nettoyer l'ensemble de bague collectrice (55).

5. Eolienne (10) selon l'une quelconque des revendications précédente, dans laquelle l'ensemble de conduits (72) comprend une pluralité d'éléments de conduit (76) agencés conjointement de la première extrémité (74) à la seconde extrémité (75) de manière à diriger du fluide de l'entrée avant de l'ensemble de générateur (24) à l'ensemble de bague collectrice (55).

6. Eolienne (10) selon la revendication 5, dans laquelle l'ensemble de conduits (72) comprend en outre au moins un ou une combinaison d'éléments de conduit droits (76), d'éléments de conduit coudés (76) ou d'éléments de conduit incurvés (76).

7. Eolienne (10) selon la revendication 5 ou la revendication 6, dans laquelle l'ensemble de conduits (72) comprend en outre une ou plusieurs potences de support (78) configurées pour supporter et monter les un ou plusieurs éléments de conduit (76) sur une surface externe du boîtier de générateur (25).

8. Eolienne (10) selon l'une quelconque des revendications précédentes, dans laquelle les éléments de contact de bague collectrice (60) comprennent des balais.

9. Eolienne (10) selon l'une quelconque des revendications précédentes, dans laquelle le fluide comprend de l'air ambiant.

10. Procédé de refroidissement ou de nettoyage de l'ensemble de bague collectrice (55) du générateur (24) dans l'éolienne (10) selon l'une quelconque des revendications précédentes, le procédé comprenant les étapes consistant à :
installer l'ensemble de conduits (72) ayant la première extrémité (74) et la seconde extrémité (75) sur le générateur (24), la première extrémité (74) étant installée à l'entrée avant du générateur (24) ou devant celle-ci, la seconde extrémité (75) étant installée dans le compartiment de bague collectrice (54) ; et
diriger un fluide à travers l'ensemble de conduits (72) de l'entrée avant du générateur (24) à l'ensemble de bague collectrice (55).
